# EUROPEAN PATENT APPLICATION

(11) **EP 3 670 247 A1**
(43) Date of publication of application: **24.06.2020**
(21) Application number: 18214533.4
(22) Date of filing: 20.12.2018
(51) Int. Cl.: B60L 53/64

(54) **A SYSTEM AND METHOD FOR PREPARING A VEHICLE FOR A JOURNEY**

(71) Applicant: Ningbo Geely Automobile Research & Development Co. Ltd., Hangzhou Bay New District Ningbo 315336 (CN)
(72) Inventor: LEGNEDAHL, Niklas, 439 36 Onsala (SE)
(74) Representative: Zacco Sweden AB

(57) **Abstract**

A system, method and computer program product for preparing a vehicle (1) for a planned mission, the method comprising (S3) determining an energy consumption for at least one part of the planned mission of at least a first energy consuming vehicle component (10a, 10b, 10c, 10d) and (S4) determining a mission preparation activity of the at least first energy consuming vehicle component (10a, 10b, 10c, 10d), wherein the mission preparation activity is utilizing an electrical connection between a vehicle onboard electric power system (90) and an external energy source (50), wherein the at least first energy consuming vehicle component (10a, 10b, 10c, 10d) is connected to the vehicle onboard electric power system (90).

## Description

### TECHNICAL FIELD

The disclosure pertains to the field of managing energy consumption in a vehicle.

### BACKGROUND

Vehicles today are equipped with components that consumes energy. One energy consuming component of a vehicle is the engine. There are different kinds of vehicle engines. Traditionally the engine is a combustion engine. There are also electric motors. In some vehicles, like plug-in hybrid electric vehicles, often have both a combustion engine and an electric motor. The energy needed for propelling vehicle with an electric motor is traditionally stored in an internal electric energy source such as a vehicle battery or a capacitor. The battery of an electric vehicle is typically charged when the electric vehicle is parked, by connecting the vehicle onboard power system with an external energy source, such as the grid. Energy from the grid can then be stored in the battery of the electric vehicle. When the battery of the electric vehicle is charged the electric vehicle can disconnect from the grid. The energy for propelling the electric vehicle is taken from the battery of the electric vehicle. Not only the engine of an electric vehicle is consuming energy. Examples of other energy consuming components in a vehicle are compartment climate control components such as fans, heaters and coolers. There are also energy consuming components needed for e.g. heating or cooling a vehicle battery of an electric vehicle. There are also further energy consuming components such as smaller electric motors for e.g. seat adjustments, door opener and convertible opener etc. Components such window, seat and steering wheel heaters are further examples. Charging and discharging a battery is also associated with a loss of energy, that is often turned into heat. There is a general desire in the world today to lower the energy consumption, both from an economic perspective but also from a sustainability perspective.

### SUMMARY

Today there is a rapid information technology development, which increases the possible amount of information that a vehicle can receive from its surrounding. At the same time there is an ongoing development of hybrid vehicles, with different kinds of available energy sources. Together these two technology trends with gives the possibility to prepare and utilize the vehicles in a new way. It is expected that future vehicle occupants would like to have the feeling that the vehicle is ready and prepared according to the occupant's needs and wishes when the occupant intends to use the vehicle. The occupant may tell the vehicle of the occupant's intended next mission or the vehicle could estimate the most likely possible next mission, based on earlier experiences of the occupant's needs and habits.

How an occupant intends to use the vehicle, the mission, includes more than just driving the route, such as ensuring that the compartment climate is according to expectations as well as that the auxiliaries requested can be utilized. The aim is that the occupant gets the perception that the vehicle is prepared for the whole of the occupant's mission, not just from a propulsion perspective but also user convenience perspective.

Today's technical solutions focus on the objective of the preparations individually per feature and do not cover the aspect of doing this with an energy perspective and coordinated. It can be that the fan is started when you unlock the vehicle or that the seats are adjusted when you unlock the vehicle.

There is a demand for an improved way to manage energy consumption in a vehicle. In particular there is a demand for managing the preparation of a vehicle, from an energy saving perspective when the vehicle is connected to an external energy source.

An object of the present disclosure is to provide a vehicle mission preparation system and method for preparing a vehicle for a planned mission.

The disclosure proposes a method for preparing a vehicle for a planned mission. The method comprising determining an energy consumption for at least one part of the planned mission of at least a first energy consuming vehicle component and determining a mission preparation activity of the at least first energy consuming vehicle component, wherein the mission preparation activity is utilizing an electrical connection between a vehicle onboard electric power system and an external energy source, wherein the at least first energy consuming vehicle component is connected to the vehicle onboard electric power system. With knowledge of the planned energy consumption of the at least first energy consuming vehicle component for at least one part of the planned mission, it can be determined e.g. how much energy that needs to be stored in a battery of the vehicle onboard electric power system so that the battery is not charged to a state of charge that is unnecessary, since over charging and maintaining a high state of charge over a long period of time is damaging the battery. Further, it can be determined if the at least first energy consuming vehicle component should utilize energy from the external energy source, while connected to the external energy source, in order to lower the energy consumption of the battery of the vehicle onboard electric power system during the mission. This in turn lowers the energy loss, and tear of a battery since unnecessary charging and discharging of the battery of the vehicle onboard electric power system can be avoided.

According to an aspect the method further comprising determining that an electrical connection is established between a vehicle onboard electronic system and an external energy source. With the knowledge of that an electrical connection is established between the vehicle onboard electronic system and the external energy source, the determined mission preparation activity of the vehicle component can be executed.

According to an aspect initiating the determined mission preparation activity comprising any of charging a battery; discharging a battery; heating a battery; cooling a battery; heating a compartment; cooling a compartment; activating electric motors for setting a vehicle seat; activating electric motors for opening a rooftop; activating electric motors for opening a window; activating a compartment humidity control; setting vehicle onboard system according to pre-determined personal settings; starting an engine; heating an engine and heating a gearbox.

According to an aspect the method further comprising obtaining from at least one of, a time information data; a location information data; a route information data and a personal setting data associated with the planned mission by the vehicle for determining an energy consumption for at least one part of the planned mission. Any of the time information data, the location information data, the route information data and the personal setting data associated with the planned mission by the vehicle alone, or in combination, is used to determine the energy consumption for at least part of the planned mission. In an example a route slope, route length, the time of the day and a weather forecast temperature can be used for determining operation of plural energy consuming vehicle components and hence the energy consumption for that specific part of the planned mission.

According to an aspect the time information data is associated with any of a departure time, an arrival time, a calendar event, a grid connect time or a time of the day interval time.

According to an aspect the location information data is associated the coordinates of a geographical location of any of a departure location, a destination location, a calendar location information, a waypoint location or a battery charging station location.

According to an aspect the route information data is associated with any of a route length data, a route slope data, a route forecast weather data, a route congestion data and a route speed limit data.

According to an aspect any of the time information data and the location information data is determined form historic data obtained from a memory by comparing historic patterns of previous missions including previous time information data or previous location information data.

According to an aspect the mission preparation activity is determined based on at least one of the energy consumption during the planned mission, and the wear of the least first vehicle component during the planned mission. Some vehicle components are associated with a certain wear that can be dependent on a certain energy consumption of the vehicle component. It may be desired to avoid certain energy consumption, or a certain usage of the vehicle component, due to the wear of the vehicle component during such circumstances. If, for example, a vehicle component is damaged by high temperature then, even if the energy consumption allows the usage of the vehicle component, it may be desired not to use the vehicle component e.g. above a certain temperature due to that the wear of the least first vehicle component causes more damage to the vehicle component in relation to the benefit from an energy consumption perspective.

According to an aspect the planned mission comprises propelling the vehicle a certain travel route, and the mission preparation activity is configured to prepare at least a first vehicle component configured to propel the vehicle. At least a first vehicle component is used for propelling the vehicle, such as the battery of a vehicle, but there are also other vehicle components that are indirectly involved in propelling the vehicle, such as an electric motor heater and a battery heater that can be used for heating an electric motor or a vehicle battery that in turn are used for propelling the vehicle. Such components can in one example be prepared while the vehicle is connected to the external energy source.

According to an aspect the planned mission comprises providing at least one occupant convenience function in the vehicle, and the mission preparation activity is configured to prepare at least a first vehicle component configured to provide at least one occupant convenience function in the vehicle. This means that e.g. a first vehicle component that is used for preparing the vehicle compartment climate, and a second vehicle component that is used for setting the vehicle seats in a certain predetermined position, both can be determined to utilize energy from the external energy source, while connected to the external energy source rather than using energy stored in a battery of the vehicle onboard electric power system.

According to an aspect the method further comprising determining an energy management strategy for performing the planned mission and determining the mission preparation activity of the at least first vehicle component according to the determined energy management strategy. With an energy management strategy the at least first vehicle component can be prepared with respect to future use during the mission, that may not just relate to energy consumption of the at least first vehicle component but also relate to e.g. the wear of the least first vehicle component during the planned mission. According to an aspect, the energy management strategy relate to at least one of an energy consumption and wear of at least a first vehicle component and at least a second vehicle component in combination.

According to an aspect the planned mission comprises propelling the vehicle a certain travel route. According to an aspect the method further comprising dividing the travel route into a plurality of sections, wherein the at least one part of the planned mission of the at least first energy consuming vehicle component is associated to one of the travel route sections. This means that the planned mission can be divided in sections and the usage of the at least first energy consuming vehicle component in each section can be planned accordingly.

According to an aspect the method further comprising assigning an operation mode to each of the sections so that the energy management strategy over the entire travel route satisfies a predetermined condition. The operation mode in one section can hence be planned to be different from the operation mode in another section, but correlated so that the energy management strategy over the entire travel route satisfies a predetermined condition.

According to an aspect the method further comprising executing the determined mission preparation activity of the vehicle component. The execution may occur later in time after the mission preparation activity of the vehicle component has been determined. In one example the determination of the mission preparation activity can occur at a remote server or at a remote portable electronic device, but executed at the vehicle onboard electric power system (90) when still connected to the external energy source.

According to an aspect the method further comprising obtaining sensor data of a sensor device operatively connected to the at least first vehicle component for determining the current status of the at least first vehicle component. According to an aspect the sensor device is configured to obtain sensor data that is used for determining a mission preparation activity of the at least first energy consuming vehicle component. According to an aspect the sensor data is any of a battery state of charge data, a battery voltage data, a battery power consumption data, a battery temperature data, a compartment temperature date, a compartment humidity data, an ambient temperature data, an ambient humidity data.

The disclosure further proposes a vehicle mission preparation system for preparing a vehicle for a planned mission. The vehicle mission preparation system comprises a vehicle onboard electric power system configured to be connected to an external energy source, at least a first energy consuming vehicle component connected to the vehicle onboard electric power system and a processing circuitry operatively connectable to the vehicle onboard electric power system. According to an aspect the vehicle mission preparation system further comprises a memory operatively connectable to the vehicle onboard electric power system. The processing circuitry is configured to cause the vehicle mission preparation system to determine an energy consumption for at least one part of the planned mission of at least a first energy consuming vehicle component and determine a mission preparation activity of the at least first energy consuming vehicle component, wherein the mission preparation activity is utilizing an electrical connection between a vehicle onboard electric power system and an external energy source, wherein the at least first energy consuming vehicle component is connected to the vehicle onboard electric power system. With knowledge of the planned energy consumption of the at least first energy consuming vehicle component for at least one part of the planned mission, it can be determined e.g. how much energy that needs to be stored in a battery of the vehicle onboard electric power system so that the battery is not charged to a state of charge that is unnecessary, since over charging and maintaining a high state of charge over a long period of time is damaging the battery. Further, it can be determined if the at least first energy consuming vehicle component should utilize energy from the external energy source, while connected to the external energy source, in order to lower the energy consumption of the battery of the vehicle onboard electric power system during the mission. This in turn lowers the energy loss, and tear of a battery since unnecessary charging and discharging of the battery of the vehicle onboard electric power system can be avoided.

According to an aspect the vehicle mission preparation system further comprises a memory operatively connectable to the processing circuitry, wherein the processing circuitry is further configured to obtain from the memory at least one of, a time information data; a location information data; a route information data; a personal setting data associated with the planned mission by the vehicle as a basis for the determining of the energy consumption for at least one part of the planned mission.

According to an aspect the mission preparation activity is determined based on at least one of the energy consumption during the planned mission, and the wear of the least first vehicle component during the planned mission. Some vehicle components are associated with a certain wear that can be dependent on a certain energy consumption of the vehicle component. It may be desired to avoid certain energy consumption, or a certain usage of the vehicle, due to the wear of the vehicle component during such circumstances. If, for example, a vehicle component is damaged by high temperature then, even if the energy consumption allows the usage of the vehicle component, it may be desired not to use the vehicle component e.g. above a certain temperature due to that the wear of the least first vehicle component causes more damage to the vehicle component in relation to the benefit from an energy consumption perspective.

According to an aspect the planned mission comprises propelling the vehicle a certain travel route, and the mission preparation activity is configured to prepare the at least first vehicle component configured to propel the vehicle. At least a first vehicle component is used for propelling the vehicle, such as the battery of a vehicle, but there are also other vehicle components that are indirectly involved in propelling the vehicle, such as an electric motor heater and a battery heater that can be used for heating an electric motor or a vehicle battery that in turn are used for propelling the vehicle. Such example components can in one example be prepared while connected to the external energy source.

According to an aspect the planned mission comprises providing at least one occupant convenience function in the vehicle, and the mission preparation activity is configured to prepare the at least first vehicle component configured to provide at least one occupant convenience function in the vehicle. This means that e.g. a first vehicle component that is used for preparing the vehicle compartment climate, and a second vehicle component that is used for setting the vehicle seats in a certain predetermined position, both can be determined to utilize energy from the external energy source, while connected to the external energy source rather than using energy stored in a battery of the vehicle onboard electric power system.

According to an aspect the processing circuitry is further configured to determine an energy management strategy for performing the planned mission and the at least first vehicle component is prepared according to the determined energy management strategy. With an energy management strategy the at least first vehicle component can be prepared with respect to future use during the mission, that may not just relate to energy consumption of the at least first vehicle component but also relate to e.g. the wear of the least first vehicle component during the planned mission. According to an aspect, the energy management strategy relate to at least one of an energy consumption and wear of at least a first vehicle component and at least a second vehicle component in combination.

According to an aspect the vehicle mission preparation system further comprises a sensor device operatively connected to the at least first vehicle component configured to obtain sensor data for determining the current status of the at least first vehicle component. According to an aspect the sensor device is configured to obtain sensor data that is used for determining a mission preparation activity of the at least first energy consuming vehicle component.

The disclosure further proposes a computer program product comprising a non-transitory computer readable medium, having thereon a computer program comprising program instructions, the computer program being loadable into a processing circuitry and configured to cause execution of the method when the computer program is run by the at least one processing circuitry.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1a illustrates a vehicle mission preparation system according to an aspect of the disclosure.
Figure 1b illustrates a vehicle mission preparation system according to an aspect of the disclosure including exemplary energy consuming vehicle components.
Figure 2a illustrates an exemplary route for a mission according to an aspect of the disclosure.
Figure 2b illustrates an exemplary altitude difference of a route for a mission according to an aspect of the disclosure.
Figure 2c illustrates an exemplary speed limit difference of a route for a mission according to an aspect of the disclosure.
Figure 3a illustrates an exemplary vehicle mission preparation system with a processing circuitry in a portable electronic device according to an aspect of the disclosure.
Figure 3b illustrates an exemplary vehicle mission preparation system with a processing circuitry in a remote server according to an aspect of the disclosure.
Figure 4 illustrates a flow chart of the method steps according to some aspects of the disclosure.
Figure 5 illustrates a computer program product according to some aspects of the disclosure.

### DETAILED DESCRIPTION

Aspects of the present disclosure will be described more fully hereinafter with reference to the accompanying drawings. The method and device disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved.

In the drawings and specification, there have been disclosed exemplary aspects of the disclosure. However, many variations and modifications can be made to these aspects without substantially departing from the principles of the present disclosure. Thus, the disclosure should be regarded as illustrative rather than restrictive, and not as being limited to the particular aspects discussed above. Accordingly, although specific terms are employed, they are used in a generic and descriptive sense only and not for purposes of limitation.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

Today there is a rapid information technology development, which increases the possible amount of information that a vehicle can receive from its surrounding. At the same time there is an ongoing development of hybrid vehicles, with different kinds of available energy sources. Together these two technology trends with gives the possibility to prepare and utilize the vehicles in a new way. It is expected that future vehicle occupants would like to have the feeling that the vehicle is ready and prepared according to the occupant's needs and wishes when the occupant intends to use the vehicle. The occupant may tell the vehicle of the occupant's intended next mission or the vehicle could do a best guess of the next possible mission, based on earlier experiences of the occupant's needs and habits.

How an occupant intends to use the vehicle, the mission, includes more than just driving the route, such as ensuring that the compartment climate is according to expectations as well as that the auxiliaries requested can be utilized. The aim is that the occupant gets the perception that the vehicle is prepared for the whole of the occupant's mission, not just from a propulsion perspective but also user convenience perspective.

Today's technical solutions focus on the objective of the preparations individually per feature and do not cover the aspect of doing this with an energy perspective and coordinated. It can be that the fan is started when you unlock the vehicle or that the seats are adjusted when you unlock the vehicle.

There is no coordination on all activities that is needed to ensure both that the occupant's expectations on preparations are ready in time as well as that the energy consumption reflection is not taken care of.

An object of the present disclosure is to provide a vehicle mission preparation system and method for preparing a vehicle for a planned mission which seek to mitigate, alleviate, or eliminate one or more of the above-identified deficiencies in the art and disadvantages singly or in any combination.

The disclosure covers aspects of preparing a vehicle to be ready to use when an occupant intends to use any vehicle functionality. The occupant shall have the feeling that all planned preparations are fulfilled according to the occupant's request.

What preparations that are needed depends upon the type of mission and therefore the function must consider both preparations needed for the mission as well as how the vehicle is used during completing the mission. The aim is to do the most suitable preparation plan by collect and understand what conditions, restrictions and optimization parameters that can affect the preparations.

The mission objectives, i.e. where to go and when etcetera, can either be given by an occupant request or by a best guess of a next mission based on earlier experiences.

When the mission objectives are known there also needs to be an assumption about the type of activities that are needed to later complete that mission. An estimate on the energy consumption during the mission needs to be calculated, taking route conditions such as topography into consideration. The mission also includes more than just driving the route, like ensuring that the compartment climate is according to expectations as well as that the auxiliaries requested can be utilized. The preparations will utilize the energy sources in the most efficient way during the preparations.

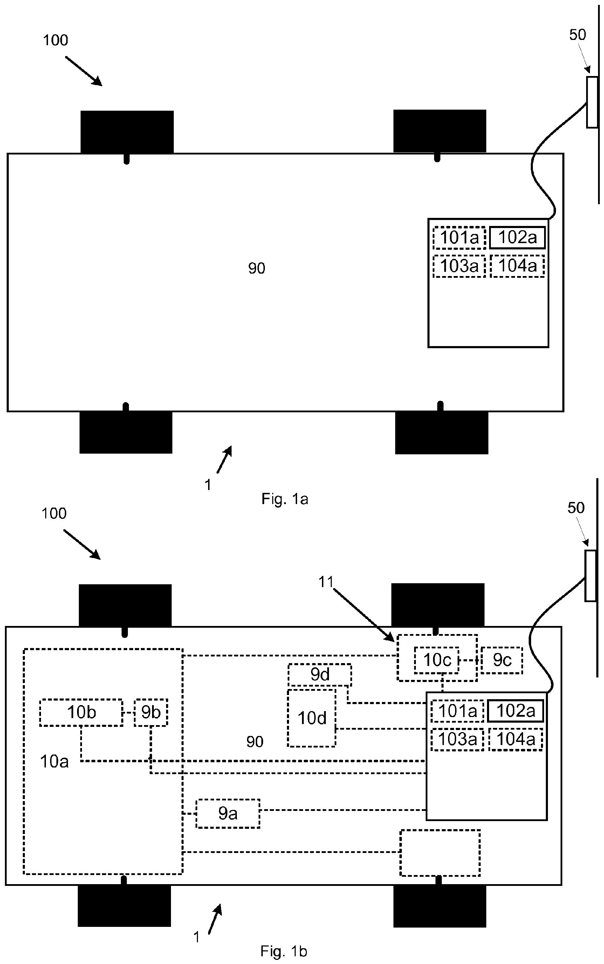

The disclosure proposes a vehicle mission preparation system 100, illustrated in Figure 1a, for preparing a vehicle 1 for a planned mission. The vehicle mission preparation system 100 comprises a vehicle onboard electric power system 90 configured to be connected to an external energy source 50. According to an aspect the vehicle onboard electric power system 90 is configured to power the vehicle 1 during a mission. According to an aspect the vehicle onboard electric power system 90 is configured to be connectable to a high voltage vehicle battery. The vehicle mission preparation system 100 comprises at least a first energy consuming vehicle component 10a, 10b, 10c, 10d connected to the vehicle onboard electric power system 90. According to an aspect a plurality of energy consuming vehicle components 10a, 10b, 10c, 10d are interconnected connected via the vehicle onboard electric power system 90. Figure 1b illustrates a vehicle mission preparation system according to an aspect of the disclosure including exemplary energy consuming vehicle components. According to an aspect the at least first energy consuming vehicle component is any of: a vehicle battery 10a, such as a high voltage vehicle battery for powering the vehicle 1; a vehicle battery charger for charging the vehicle battery 10a, a vehicle battery heater 10b for heating the vehicle battery; a vehicle battery cooler for cooling the vehicle battery; an electric motor heater 10c for heating an electric motor 11; a vehicle compartment cooler for cooling a vehicle compartment; an electric motor 10d for adjusting the setting of a vehicle seat; an electric motor for opening a rooftop; an electric motor for opening a window; an electric motor for adjusting a mirror; a climate control unit for controlling the vehicle compartment humidity; a personal setting control unit setting vehicle onboard system according to pre-determined personal settings; an engine start component for starting an engine; a gear box heater for heating a gearbox; a motor heater for heating the motor; a light for lighting the surroundings or the interior of the vehicle; an in car entertainment system for entertain occupants of the vehicle; a vehicle computer system for managing vehicle data.

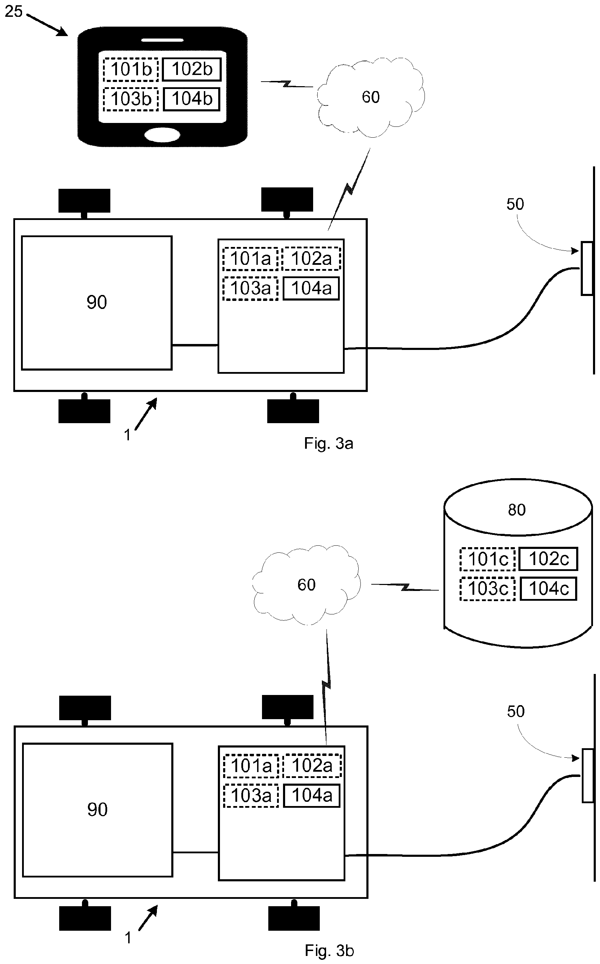

The vehicle mission preparation system 100 comprises a processing circuitry 102a, 102b, 102c operatively connectable to the vehicle onboard electric power system 90. According to an aspect, as illustrated in Figure 3a and Figure 3b, the processing circuitry 102a, 102b, 102c is operatively connectable to a communication unit 104a, 104b, 104c adapted to communicate via a communication network 60.

According to an aspect the vehicle mission preparation system 100 further comprises a user interface 101a, 101b, 101c operatively connectable to the processing circuitry 102a, 102b, 102c. According to an aspect the user interface 101a, 101b, 101c is configured to output information to an occupant of the vehicle 1. According to an aspect the user interface 101a, 101b, 101c is configured to receive input information from an occupant of the vehicle 1. According to an aspect the user interface 101a, 101b, 101c is any of a touch sensitive display, a display combined with a keyboard or a voice controlled user interface.

According to an aspect the vehicle mission preparation system 100 further comprises a memory 103a, 103b, 103c operatively connectable to the processing circuitry 102a, 102b, 102c. According to an aspect, as illustrated in Figure 3a and Figure 3b, the memory 103a, 103b, 103c is operatively connectable to a communication unit 104a, 104b, 104c configured to communicate via a communication network 60.

According to an aspect the vehicle mission preparation system 100 further comprises a memory 103a, 103b, 103c operatively connectable to the processing circuitry 102a, 102b, 102c, wherein the processing circuitry 102a, 102b, 102c is further configured to obtain from the memory 103a, 103b, 103c at least one of, a time information data TID; a location information data LID; a route information data RID; a personal setting data PSD associated with the planned mission by the vehicle 1 for determining an energy consumption for at least one part of the planned mission. In one example the communication network 60, as illustrated in Figure 3a and Figure 3b, is a standardized wireless local area network such as a Wireless Local Area Network, WLAN, Bluetooth™, ZigBee, Ultra-Wideband, Near Field Communication, NFC, Radio Frequency Identification, RFID, or similar network. In one example the communication network 60 is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network. The communication network 60 can also be a combination of both a local area network and a wide area network. The communication network 60 can also be a wired network. According to an aspect the communication network 60 is defined by common Internet Protocols.

Figure 3a illustrates an exemplary vehicle mission preparation system with a processing circuitry in a portable electronic device according to an aspect of the disclosure. In the example illustrated with Figure 3a, a portable electronic device 25, such as a smartphone or a tablet, with a processing circuitry 102b and a communication unit 104b, is connected to the communication unit 104a of the vehicle 1 via the communication network 60 for preparing the vehicle 1 for a planned mission.

Figure 3b illustrates an exemplary vehicle mission preparation system with a processing circuitry in a remote server according to an aspect of the disclosure. In the example illustrated with Figure 3c, a remote server 80, with a processing circuitry 102c and a communication unit 104c, is connected to the communication unit 104a of the vehicle 1 via the communication network 60 for preparing the vehicle 1 for a planned mission.

According to an aspect, as illustrated in Figure 1, the processing circuitry 102a is comprised in the vehicle 1 and connected to the vehicle onboard electric power system 90.

The processing circuitry 102a, 102b, 102c is configured to cause the vehicle mission preparation system 100 to determine an energy consumption for at least one part of the planned mission of at least a first energy consuming vehicle component 10a, 10b, 10c, 10d and determine a mission preparation activity of the at least first energy consuming vehicle component 10a, 10b, 10c, 10d, wherein the mission preparation activity is utilizing an electrical connection between a vehicle onboard electric power system 90 and an external energy source 50; wherein the at least first energy consuming vehicle component 10a, 10b, 10c, 10d is connected to the vehicle onboard electric power system 90. According to an aspect the external energy source 50 is the electric grid. According to an aspect the external energy source 50 is an external battery. According to an aspect the external energy source 50 is a vehicle 1 with a vehicle battery. With knowledge of the planned energy consumption of the at least first energy consuming vehicle component 10a, 10b, 10c, 10d for at least one part of the planned mission, it can be determined e.g. how much energy that needs to be stored in a vehicle battery of the vehicle onboard electric power system 90 so that the vehicle battery is not charged to a higher state of charge than what is necessary, since over charging and maintaining a high state of charge over a long period of time is damaging the battery. Further, it can be determined if the at least first energy consuming vehicle component 10a, 10b, 10c, 10d should utilize energy from the external energy source 50, while connected to the external energy source 50, in order to lower the energy consumption of the vehicle battery of the vehicle onboard electric power system 90 during the mission. This in turn lowers the energy loss, and tear of the battery since unnecessary charging and discharging of the battery of the vehicle onboard electric power system 90 can be avoided.

According to an aspect the vehicle mission preparation system 100 further comprises a sensor device 9a, 9b, 9c, 9d operatively connected to the at least first vehicle component 10a, 10b, 10c, 10d configured to obtain sensor data for determining the current status of the at least first vehicle component 10a, 10b, 10c, 10d. According to an aspect the sensor device 9a, 9b, 9c, 9d is configured to obtain sensor data that is used for determining a mission preparation activity of the at least first energy consuming vehicle component 10a, 10b, 10c, 10d. Reference is now made to Figure 1b. According to an aspect the sensor device is any of: a voltage meter 9a for measuring the state of charge; an ampere-hours meter for measuring the state of charge; a temperature sensor for measuring the temperature; a vehicle battery temperature sensor 9b for measuring the temperature of the vehicle battery 10a; a vehicle motor temperature sensor 9b for measuring the temperature of the vehicle motor 11; a motion sensor 9d such as an accelerometer or a gyroscope for detecting movements and/or relative movement, acceleration and position; a hygrometer for measuring the humidity; a barometer for measuring the air pressure; a light sensor for measuring light conditions; a camera for capturing images and video; a microphone for recording any sound such as voice; a compass, for finding a relative direction; a Global Positioning System, GPS, receiver for determining the geographical position; a pressure sensor for measuring the tire pressure; a touch screen sensor for input and output of information; or any other sensor.

The inventor suggests a method where preparing a vehicle for a planned mission covers the aspects of preparing the vehicle to be ready to use when the occupant intends to use any vehicle functionality. The occupant shall have the feeling that all planned preparations are fulfilled according to his/her request. What preparations that are needed depends upon the type of mission and therefore the function must consider both preparations needed for the mission as well as how the vehicle is used during completing the mission. The aim is to do the most suitable preparation plan by collect and understand what conditions, restrictions and optimization parameters that can affect the preparations. The mission objectives, like where and when to go etcetera, can either be given by a user request or by a best guess of next mission based on earlier experiences.

When the mission objectives are known there also needs to be an assumption about the type of activities that are needed to later complete that mission. An estimate on the energy consumption during the mission needs to be calculated, taking route conditions such as topography into consideration. The mission also includes more than just driving the route, like ensuring that the compartment climate is according to expectations as well as that the auxiliaries requested can be utilized. The preparations will utilize the energy sources in the most efficient way during the preparations. In one example utilizing energy from an external energy source is considered cheaper, lifetime saving for the battery, fuel economic and range extending.

The disclosure proposes a method for preparing a vehicle 1 for a planned mission. According to an aspect the disclosure proposes a method for preparing a vehicle 1 for a planned mission during which the vehicle 1 is not connected to an external energy source 50. According to an aspect the method comprising receiving input of information, via a user interface 101a, 101b, 101c defining the mission. In one example a vehicle occupant enters the information via a user interface 101a, 101b, 101c of a portable electronic device 25, such as a smartphone or a tablet. According to an aspect the occupant enters time information data TID and location information data LID via the user interface 101a, 101b, 101c. In one example the occupant enters information destination location and departure time. According to an aspect the method comprising receiving input of information from a remote server 80 defining the mission. In one example the input of a mission from the remote server comprising historic patterns of previous missions. According to an aspect the method comprising determining a mission based on data obtained from a memory 103a, 103b, 103c.

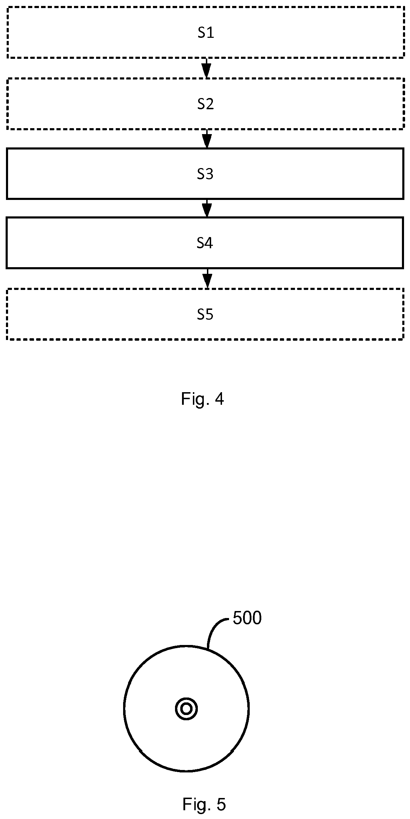

Figure 4 illustrates a flow chart of the method steps according to some aspects of the disclosure. According to an aspect, the processing circuitry 102a, 102b, 102c is configured to cause steps of the vehicle mission preparation system 100. The method comprising the steps of S3 determining an energy consumption for at least one part of the planned mission of at least a first energy consuming vehicle component 10a, 10b, 10c, 10d and S4 determining a mission preparation activity of the at least first energy consuming vehicle component 10a, 10b, 10c, 10d, wherein the mission preparation activity is utilizing an electrical connection between a vehicle onboard electric power system 90 and an external energy source 50, wherein the at least first energy consuming vehicle component 10a, 10b, 10c, 10d is connected to the vehicle onboard electric power system 90. With knowledge of the planned energy consumption of the at least first energy consuming vehicle component 10a, 10b, 10c, 10d for at least one part of the planned mission, it can be determined e.g. how much energy that needs to be stored in a vehicle battery of the vehicle onboard electric power system 90 so that the vehicle battery is not charged to a higher state of charge than what is necessary, since over charging and maintaining a high state of charge over a long period of time is damaging the battery. Further, it can be determined if the at least first energy consuming vehicle component 10a, 10b, 10c, 10d should utilize energy from the external energy source 50, while connected to the external energy source 50, in order to lower the energy consumption of the vehicle battery of the vehicle onboard electric power system 90 during the mission. This in turn lowers the energy loss, and tear of the battery since unnecessary charging and discharging of the battery of the vehicle onboard electric power system 90 can be avoided.

According to an aspect determining an energy consumption for at least one part of the planned mission of at least a first energy consuming vehicle component 10a, 10b, 10c, 10d depends on different data. According to an aspect the method further comprising S2 obtaining from a memory 103a, 103b, 103c at least one of, a time information data TID; a location information data LID; a route information data RID and a personal setting data PSD associated with the planned mission by the vehicle 1 as basis for the determining of the energy consumption for the at least one part of the planned mission. Any of the time information data TID, the location information data LID, the route information data RID and the personal setting data PSD associated with the planned mission by the vehicle 1 alone, or in combination, is used to determine the energy consumption for at least part of the planned mission. In an example a route slope, route length, the time of the day and a weather forecast temperature can be used for determining operation of plural energy consuming vehicle components 10a, 10b, 10c, 10d and hence the energy consumption for that specific part of the planned mission.

According to an aspect the time information data TID is associated with any of a departure time, an arrival time, a calendar event, a grid connect time or a time of the day interval time. In one example a time of departure can be determined by time data from a calendar event. In one example an occupant is entering data such as departure time via a user interface 101a, 101b, 101c.

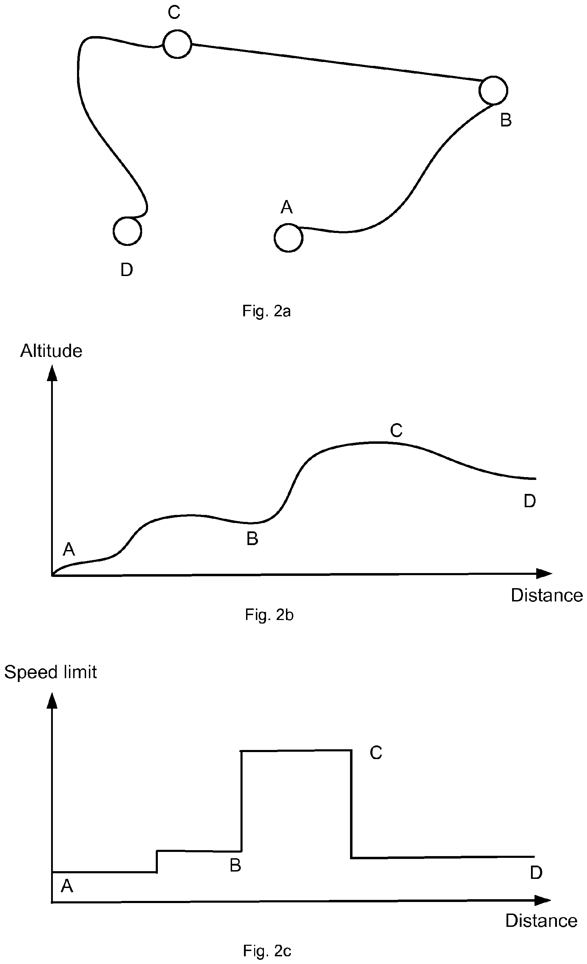

According to an aspect the location information data LID is associated the coordinates of a geographical location of any of a departure location, a destination location, a calendar location information, a waypoint location or a battery charging station location. In one example, with reference to the example route as illustrated in Figure 2a, location information data LID is the geographical location of the starting point A, the way points B and C and the destination point D. According to an aspect any of the time information data TID and the location information data LID is determined form historic data obtained from a memory 103a, 103b, 103c by comparing historic patterns of previous missions including previous time information data or previous location information data LID.

According to an aspect the route information data RID is associated with any of a route length data, a route slope data, a route forecast weather data, a route congestion data and a route speed limit data. In one example, with reference to the example route illustrated in Figure 2a together with the altitude difference in Figure 2b and the speed limit difference in Figure 2c, the route information data gives a plurality of input. In the example there is an increase in the altitude when driving from point A to point B, and even a further increased altitude when driving from point B to point C, but then it is downhill form point C to point D. At the same time the speed limit on the different parts of the route require a certain energy consumption. The speed limit is lower between point A to point B compared with the speed limit between the point B and point C that is higher. In this example, and e.g. using a vehicle 1 with an electric motor, it can be determined that a certain amount of electric energy needs to be consumed to in order to manage both the increased altitude between point A and point C, and the increased speed on the route from point B to point C. At the same time it can be determined that less energy is needed to drive C to point D, where there is downhill and a lower speed limit.

In the example further route information data RID such as route forecast weather data can be used for determining the mission preparation activity of the at least first energy consuming vehicle component 10a, 10b, 10c, 10d. In the example the route forecast weather data tells that the temperature at the time for departure at point A will be freezing cold while the temperature gets milder during the route and is warmer at the estimated time of arrival at point D.

In the example, an occupant may have a personal setting data PSD that defines that the temperature in the vehicle compartment at time for departure is desired so that no extra clothing is required, e.g. around normal indoor temperature, and that all seats of the vehicle are adjusted to a certain position. This will also consume a certain amount of energy.

According to an aspect determining an energy consumption for at least one part of the planned mission comprising adding the total energy consumption that relate to at least one part of the planned mission of a plurality of energy consuming vehicle components 10a, 10b, 10c, 10d.

According to an aspect the method further comprising S1 determining that an electrical connection is established between a vehicle onboard electronic system 90 and an external energy source 50. With the knowledge of that an electrical connection is established between the vehicle onboard electronic system 90 and the external energy source 50, the determined mission preparation activity of the vehicle component 10a, 10b, 10c, 10d can be executed.

According to an aspect, determining a mission preparation activity of the at least first energy consuming vehicle component 10a, 10b, 10c, 10d comprising determining when in time the mission preparation activity can be executed. In one example, execution of a mission preparation activity of the at least first energy consuming vehicle component 10a, 10b, 10c, 10d is preferred to occur while an electrical connection is established between the vehicle onboard electronic system 90 and the external energy source 50. Utilizing the energy from the external energy source 50 is often cheaper, and the tear of the vehicle battery is less, since unnecessary charging and discharging of the vehicle battery can be avoided.

With the given example, using an electric vehicle, certain mission preparation activities of a plurality of energy consuming vehicle components 10a, 10b, 10c, 10d can be identified. The mission includes the route going from point A to point D. The known altitude and speed data, as exemplified in Figure 2b and Figure 2c, gives a good indication of how much electric energy that needs to be consumed to propel the electric motor of the vehicle 1. Further, the departure time and location, gives a certain weather forecast information, and since temperature below freezing is expected at the departure time, i.e. the vehicle battery and the compartment is required to be warmed up. In this example, the energy consuming vehicle components involved are: the vehicle battery 10a; the vehicle battery heater 10b for heating the vehicle battery; the electric motor heater 10c for heating the electric motor 11; the electric motor 10d for adjusting the setting of the vehicle seats.

In the example, a sensor device in form a voltage sensor 9a, is used to measure the state of charge of the vehicle battery 10a. With the determined power consumption the battery needs to be charged to a certain state of charge. To accomplish the mission with margin, the most cost effective way to charge the vehicle battery is to do this during low energy cost time from the grid, but at the same time balance for the life time cost of a high average state of charge and, also balance the charging temperature. Further, since it is freezing temperature at the time for departure the vehicle battery needs to be warmed up. In the example it is determined that one mission preparation activity is to charge the vehicle battery when the vehicle battery temperature is sufficiently high, with medium high power during low energy cost time.

In the example the battery is heated, using a vehicle battery heater 10b for heating the vehicle battery 10a, by energy from the grid to a preferred temperature before the charging starts. This can be done by energy from grid since that was cheapest at this time. The vehicle battery will be additionally heated during the charging but the ambient temperature in the surrounding will cool it down to optimal start temperature.

In the example the occupant wants all seats of the vehicle to be adjusted to a certain position at time for departure. Another mission preparation activity is then to adjust all the seats. This preparation activity is not time critical and can hence be performed during low energy cost time with energy from the grid.

In the example a further preparation activity is heating the electric motor 11 with the electric motor heater 10c, in order to get optimal operation temperature at the time for departure. This preparation activity is time critical since the temperature needs to be at a desired level when it is time for departure and hence this preparation activity may not always be performed during low energy cost time with energy from the grid.

In the example, with the knowledge of that an electrical connection is established between the vehicle onboard electronic system 90 and the external energy source 50, the determined mission preparation activities of the vehicle components 10a, 10b, 10c, 10d can be executed in a cost and energy efficient way.

There are a plurality of different preparation activities other than the ones given in the example. According to an aspect initiating the determined mission preparation activity comprising any of: powering the vehicle; charging the vehicle battery 10a; heating the vehicle battery 10a; cooling the vehicle battery 10a; heating an electric motor 11; cooling a vehicle compartment; adjusting the setting of a vehicle seat; opening a rooftop; opening a window; adjusting a mirror; controlling the vehicle compartment humidity; setting vehicle onboard system according to pre-determined personal settings; starting an engine; heating a gearbox; heating the motor; lighting the surroundings or the interior of the vehicle; managing vehicle data and discharging a battery.

According to an aspect the mission preparation activity is determined based on at least one of the energy consumption during the planned mission, and the wear of the least first vehicle component 10a, 10b, 10c, 10d during the planned mission. Some vehicle components 10a, 10b, 10c, 10d are associated with a certain wear that can be dependent on a certain energy consumption of the vehicle component 10a, 10b, 10c, 10d. It may be desired to avoid certain energy consumption, or a certain usage of the vehicle component 10a, 10b, 10c, 10d, due to the wear of the vehicle component 10a, 10b, 10c, 10d during such circumstances. If, for example, a vehicle component 10a, 10b, 10c, 10d is damaged by high temperature then, even if the energy consumption allows the usage of the vehicle component 10a, 10b, 10c, 10d, it may be desired not to use the vehicle component 10a, 10b, 10c, 10d e.g. above a certain temperature due to that the wear of the least first vehicle component 10a, 10b, 10c, 10d causes more damage to the vehicle component 10a, 10b, 10c, 10d in relation to the benefit from an energy consumption perspective. Wear of the least first vehicle component 10a, 10b, 10c, 10d during the planned mission can be measured in different ways. According to an aspect wear is determined by at least one of the number of times the at least first vehicle component 10a, 10b, 10c, 10d is used, the accumulated usage time of the at least first vehicle component 10a, 10b, 10c, 10d and the usage temperature of the at least first vehicle component 10a, 10b, 10c, 10d.

According to an aspect the planned mission comprises propelling the vehicle 1 a certain travel route, and the mission preparation activity is configured to prepare at least a first vehicle component 10a, 10b, 10c, 10d configured to propel the vehicle 1. At least a first vehicle component 10a, 10b, 10c, 10d is used for propelling the vehicle 1, such as the battery of a vehicle, but there are also other vehicle components 10a, 10b, 10c, 10d that are indirectly involved in propelling the vehicle, such as an electric motor heater and a battery heater that can be used for heating an electric motor or a vehicle battery that in turn are used for propelling the vehicle. Such example components can in one example be prepared while connected to the external energy source 50.

According to an aspect the planned mission comprises providing at least one occupant convenience function in the vehicle, and the mission preparation activity is configured to prepare at least a first vehicle component 10a, 10b, 10c, 10d configured to provide at least one occupant convenience function in the vehicle 1. This means that e.g. a first vehicle component 10a, 10b, 10c, 10d that is used for preparing the vehicle compartment climate, and a second vehicle component 10a, 10b, 10c, 10d that is used for setting the vehicle seats in a certain predetermined position, both can be determined to utilize energy from the external energy source 50, while connected to the external energy source 50 rather than using energy stored in a battery of the vehicle onboard electric power system 90. In one example the occupant convenience function is not time critical, e.g. adjusting the mirrors to a certain position. In one example the occupant convenience function is time critical, e.g. warming the seats or opening the convertible etc.

According to an aspect the method further comprising S5 determining an energy management strategy for performing the planned mission and determining the mission preparation activity of the at least first vehicle component 10a, 10b, 10c, 10d according to the determined energy management strategy. With an energy management strategy the at least first vehicle component 10a, 10b, 10c, 10d can be prepared with respect to future use during the mission, that may not just relate to energy consumption of the at least first vehicle component 10a, 10b, 10c, 10d but also relate to e.g. the wear of the least first vehicle component 10a, 10b, 10c, 10d during the planned mission. According to an aspect, the energy management strategy relate to at least one of an energy consumption and wear of at least a first vehicle component 10a, 10b, 10c, 10d and at least a second vehicle component 10a, 10b, 10c, 10d in combination. In one example a vehicle battery needs to be both charged and heated before the time of departure. Since charging of the vehicle battery generates heat in itself a strategy may be to wait with charging the vehicle battery until just before the time for departure in order to utilize the generated heat from the charging of the battery and thereby minimize heating of the battery using a separate vehicle component in form of a vehicle battery heater 10b. Further, if it is determined that the first route of the mission requires a substantial amount of energy, i.e. that the vehicle battery is quite heavily discharged just after time of departure, a strategy may be to not heat the battery to a certain temperature, but to a temperature that is below the certain temperature, to avoid overheating of the vehicle battery during mission.

According to an aspect the planned mission comprises propelling the vehicle 1 a certain travel route. According to an aspect the method further comprising dividing the travel route into a plurality of sections, wherein the at least one part of the planned mission of the at least first energy consuming vehicle component 10a, 10b, 10c, 10d is associated to one of the travel route sections. Figure 2 illustrates an example travel route from A to D. In one example one section is the part from A to B. Another section is the part from B to C. But a section can also be e.g. be the part from A to C. This means that the planned mission can be divided in sections and the usage of the at least first energy consuming vehicle component 10a, 10b, 10c, 10d in each section can be planned accordingly.

According to an aspect the method further comprising assigning an operation mode to each of the sections so that the energy management strategy over the entire travel route satisfies a predetermined condition. The operation mode in one section can hence be planned to be different from the operation mode in another section, but correlated so that the energy management strategy over the entire travel route satisfies a predetermined condition. According to an aspect the method further comprising S6 executing the determined mission preparation activity of the vehicle component 10a, 10b, 10c, 10d. The execution may occur later in time after the mission preparation activity of the vehicle component 10a, 10b, 10c, 10d has been determined. In one example the determination of the mission preparation activity can occur at a remote server or at a remote portable electronic device, but executed at the vehicle onboard electric power system 90 when still connected to the external energy source 50.

According to an aspect the method further comprising obtaining sensor data of a sensor device 9a, 9b, 9c, 9d operatively connected to the at least first vehicle component 10a, 10b, 10c, 10d for determining the current status of the at least first vehicle component 10a, 10b, 10c, 10d. According to an aspect the sensor device 9a, 9b, 9c, 9d is configured to obtain sensor data that is used for determining a mission preparation activity of the at least first energy consuming vehicle component 10a, 10b, 10c, 10d. According to an aspect the sensor data is any of a battery state of charge data, a battery voltage data, a battery power consumption data, a battery temperature data, a compartment temperature date, a compartment humidity data, an ambient temperature data, an ambient humidity data.

The disclosure further proposes, as illustrated in Figure 5, a computer program product 500 comprising a non-transitory computer readable medium, having thereon a computer program comprising program instructions, the computer program being loadable into a processing circuitry 102a, 102b, 102c and configured to cause execution of the method when the computer program is run by the at least one processing circuitry 102a, 102b, 102c.

According to an aspect the vehicle mission preparation system 100 is configured to carry out any or more of the aspects of the described method. According to an aspect of the disclosure, the method is carried out by instructions in a software program that is downloaded and run in the vehicle mission preparation system 100.

One use case for exemplifying the use of the vehicle mission preparation system 100 will now be described with reference to the figures 1b, 2a-c and 3a. One day, an occupant makes up plans to visit friends in city "D", as visualized in figure 2, the next day. The occupant is using a smartphone 25 that runs an application that is connected to the vehicle 1 via a communication network 60 and that runs an application that is configured to carry out any or more of the aspects of the described method for preparing the vehicle for a planned mission. The occupant enters time information data TID and location information data LID via the user interface 101b of the smartphone 25. In the use case example the occupant enters the destination location, city "D" and the departure time, 08:15. Before going to bed the occupant connects the vehicle 1 to the grid in the garage. The vehicle mission preparation system 100 determines that an electrical connection is established between the vehicle onboard electronic system 90 and the external energy source 50. The vehicle mission preparation system 100 obtains route information data RID based on the knowledge of the current location of the vehicle 1 and the destination location, city "D" in combination with the departure time, 08:15. The route information data RID obtained by the vehicle mission preparation system 100 from a server 80 comprising route distance data, route slope data, route speed limit data, as illustrated in figures 2a-2c, together with weather information data. The given route distance, slope and speed limit data, and weather data, that tells it will be freezing cold during the route all day, is used for determining the energy consumption for the planned mission of plural energy consuming vehicle components 10a, 10b, 10c, 10d, that in this example are the vehicle battery 10a, the vehicle battery heater 10b and the electric motor heater 10c. It is determined that the energy consumption by the battery is a certain amount and that the battery needs to be charged to a certain state of charge. The energy consumption for heating the battery to a certain temperature at 08:15 is also determined. At the same time it is determined that going from city "A" to city "C" the energy consumption needed will in itself make both the electric motor 11 and the vehicle battery 10a warmer compared to normal operation, and hence it is determined that the energy consumption of the vehicle battery heater 10b is less than normal. The voltage sensor 9a measures the current state of charge of the vehicle battery 10a, and it is determined that the vehicle battery needs to be charged quite heavily to get the determined state of charge before departure at 08:15. A plural mission preparation activities are determined. When determining the plural mission preparation activities, in this example charging the vehicle battery, heating the vehicle battery and heating the electric motor, it is determined that the charging of the battery will occur at a time close to the departure time 08:15 so that the charging of the battery at the same time warms up the battery, so that the vehicle battery heater 10b can consume less power. It is also determined that the electric motor heater 10c should be activated while connected to the grid so that the motor heater 10c heats up the motor to a certain temperature just before departure at 08:15, to lower the energy consumption from the vehicle battery during the mission. It was determined that going from city "A" to city "C" the energy consumption needed will in itself make both the electric motor 11 and the vehicle battery 10a warmer compared to normal operation. In other words the energy consumption from the vehicle battery heater and the motor heater 10c is determined to be less than normal on route from city "A" to city "C". The occupant sets the alarm clock and while sleeping, the vehicle mission preparation system 100 prepares the vehicle 1 for the mission. When the occupant departs at 08:15, the vehicle battery is charged to certain state of charge needed for the mission considering the energy consumption of plural energy consuming vehicle components. Further, at departure 08:15 some of these energy consuming vehicle components have been prepared according to different mission preparation activities in view of different energy consuming aspects for at least one part of the planned mission.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A method for preparing a vehicle (1) for a planned mission, the method comprising:
- (S3) determining an energy consumption for at least one part of the planned mission of at least a first energy consuming vehicle component (10a, 10b, 10c, 10d); and
- (S4) determining a mission preparation activity of the at least first energy consuming vehicle component (10a, 10b, 10c, 10d), wherein the mission preparation activity is utilizing an electrical connection between a vehicle onboard electric power system (90) and an external energy source (50); wherein the at least first energy consuming vehicle component (10a, 10b, 10c, 10d) is connected to the vehicle onboard electric power system (90).

2. The method according to any of the preceding claims, the method further comprising:
- (S2) obtaining from a memory (103a, 103b, 103c) at least one of, a time information data (TID); a location information data (LID); a route information data (RID) and a personal setting data (PSD) associated with the planned mission by the vehicle (1) as basis for the determining of the energy consumption for the at least one part of the planned mission.

3. The method according to any of the preceding claims, wherein the mission preparation activity is determined based on at least one of the energy consumption during the planned mission, and the wear of the least first vehicle component (10a, 10b, 10c, 10d) during the planned mission.

4. The method according to any of the preceding claims, wherein the planned mission comprises propelling the vehicle (1) a certain travel route, and the mission preparation activity is configured to prepare at least a first vehicle component (10a, 10b, 10c, 10d) configured to propel the vehicle (1).

5. The method according to any of the preceding claims, wherein the planned mission comprises providing at least one occupant convenience function in the vehicle, and the mission preparation activity is configured to prepare at least a first vehicle component (10a, 10b, 10c, 10d) configured to provide at least one occupant convenience function in the vehicle (1).

6. The method according to any of the preceding claims, the method further comprising:
- (S5) determining an energy management strategy for performing the planned mission and determining the mission preparation activity of the at least first vehicle component (10a, 10b, 10c, 10d) according to the determined energy management strategy.

7. The method according to any of the preceding claims, wherein the planned mission comprises propelling the vehicle (1) a certain travel route, the method further comprising:
- dividing the travel route into a plurality of sections, wherein the at least one part of the planned mission of the at least first energy consuming vehicle component (10a, 10b, 10c, 10d) is associated to one of the travel route sections.

8. The method according to claim 6 and 7, the method further comprising:
- assigning an operation mode to each of the sections so that the energy management strategy over the entire travel route satisfies a predetermined condition.

9. The method according to any of the preceding claims, the method further comprising:
- obtaining sensor data of a sensor device (9a, 9b, 9c, 9d) operatively connected to the at least first vehicle component (10a, 10b, 10c, 10d) for determining the current status of the at least first vehicle component (10a, 10b, 10c, 10d).

10. A vehicle mission preparation system (100) for preparing a vehicle (1) for a planned mission, the vehicle mission preparation system (100) comprises:
• a vehicle onboard electric power system (90) configured to be connected to an external energy source (50);
• at least a first energy consuming vehicle component (10a, 10b, 10c, 10d) connected to the vehicle onboard electric power system (90);
• a processing circuitry (102a, 102b, 102c) operatively connectable to the vehicle onboard electric power system (90) configured to cause the vehicle mission preparation system (100) to:
- determine an energy consumption for at least one part of the planned mission of at least a first energy consuming vehicle component (10a, 10b, 10c, 10d);
- determine a mission preparation activity of the at least first energy consuming vehicle component (10a, 10b, 10c, 10d), wherein the mission preparation activity is utilizing an electrical connection between a vehicle onboard electric power system (90) and an external energy source (50); wherein the at least first energy consuming vehicle component (10a, 10b, 10c, 10d) is connected to the vehicle onboard electric power system (90).

11. The vehicle mission preparation system (100) according to claim 10 further comprises a memory (103a, 103b, 103c) operatively connectable to the processing circuitry (102a, 102b, 102c), wherein the processing circuitry (102a, 102b, 102c) is further configured to:
- obtain from the memory (103a, 103b, 103c) at least one of, a time information data (TID); a location information data (LID); a route information data (RID); a personal setting data (PSD) associated with the planned mission by the vehicle (1) for determining an energy consumption for at least one part of the planned mission.

12. The vehicle mission preparation system (100) according to any of the claims 10-11, wherein the mission preparation activity is determined based on at least one of the energy consumption during the planned mission, and the wear of the least first vehicle component (10a, 10b, 10c, 10d) during the planned mission.

13. The vehicle mission preparation system (100) according to any of the claims 10-12, wherein the planned mission comprises propelling the vehicle (1) a certain travel route, and the mission preparation activity is configured to prepare the at least first vehicle component (10a, 10b, 10c, 10d) configured to propel the vehicle (1).

14. The vehicle mission preparation system (100) according to any of the claims 10-13, wherein the planned mission comprises providing at least one occupant convenience function in the vehicle, and the mission preparation activity is configured to prepare the at least first vehicle component (10a, 10b, 10c, 10d) configured to provide at least one occupant convenience function in the vehicle (1).

15. A computer program product (500) comprising a non-transitory computer readable medium, having thereon a computer program comprising program instructions, the computer program being loadable into a processing circuitry (102a, 102b, 102c) and configured to cause execution of the method according to any of claims 1 through 9 when the computer program is run by the processing circuitry (102a, 102b, 102c).
